Europäisches Patentamt

European Patent Office

Office européen des brevets

(19)

(11)  EP 1 031 847 B1

(12)  FASCICULE DE BREVET EUROPEEN

(45) Date de publication et mention
de la délivrance du brevet:
**07.06.2006  Bulletin 2006/23**

(51) Int Cl.:
***G01S 5/12*** *(2006.01)*

(21) Numéro de dépôt: **00400453.7**

(22) Date de dépôt: **18.02.2000**

(54) **Procédé de localisation de radios mobiles terrestres a partir d'un aeronef**

Verfahren zur Ortsbestimmung terrestrischer Mobilfzunkgeräte aus einem Luftfahrzeug

Method for locating terrestrial mobile radios from an aircraft

(84) Etats contractants désignés:
**AT BE CH CY DE DK ES FI FR GB GR IE IT LI LU
MC NL PT SE**

(30) Priorité: **23.02.1999  FR 9902244**

(43) Date de publication de la demande:
**30.08.2000  Bulletin 2000/35**

(73) Titulaire: **Thales**
**75008 Paris (FR)**

(72) Inventeurs:
• **Monot, Jean-Jacques**
**94117 Arcueil Cedex (FR)**
• **Ferreol, Anne**
**94117 Arcueil Cedex (FR)**
• **Bernardot, Laurent**
**94117 Arcueil Cedex (FR)**

(56) Documents cités:
**FR-A- 2 721 410          FR-A- 2 721 459
FR-A- 2 766 320**

# EP 1 031 847 B1

**Description**

La présente invention concerne un procédé et un dispositif pour la localisation, à partir d'un aéronef, d'émetteurs terrestres fixes ou mobiles. Ces émetteurs appartiennent à un système de radiocommunications cellulaires de type TDMA ; en particulier ce système consiste en un réseau de radiocommunications utilisant la norme GSM ou DCS 1800. La norme DCS 1800 est une évolution de la norme GSM. Le sigle TDMA est une abréviation des termes anglo-saxons « Time Division Multiple Access » ; il est parfois remplacé par le sigle AMRT qui est l'abréviation des termes « Accès Multiple Répartition dans le Temps ». Le sigle GSM est une abréviation des termes anglo-saxons « Global System for Mobile communication ». Le sigle DCS est une abréviation des termes anglo-saxons « Digital Cellular System ».

Le réseau GSM est un réseau permettant d'assurer des communications numériques, entre des mobiles ou entre des mobiles et des abonnés du réseau public commuté.

Pour que le réseau puisse offrir ces services, une série de fonctions a été définie. Ces fonctions sont celles requises dans tout réseau de mobiles ; il s'agit par exemple de la numérotation, de l'acheminement vers un usager mobile, du transfert de cellules, etc... Ces fonctions sont réparties dans des entités.

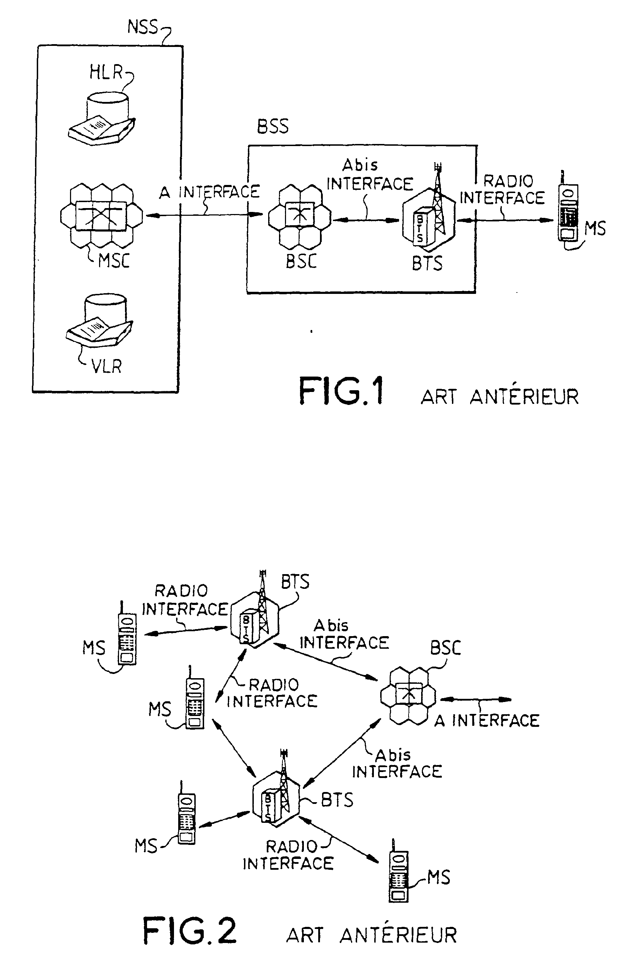

Le réseau complet, schématisé sur la figure 1, comprend plusieurs de ces entités. Une entité peut être :

- une station mobile, ou MS qui est l'abréviation de l'expression anglo-saxonne « Mobile Station ».
  La station mobile est l'équipement physique utilisé par l'usager du réseau GSM pour accéder aux services de télécommunication offerts. Il existe différents types de stations mobiles : les mobiles montés sur des véhicules, les portables ou les portatifs. Les portatifs représentent actuellement l'essentiel du marché des stations mobiles. Les stations mobiles MS peuvent se déplacer à travers un certain nombre de cellules.
- un sous-système radio, ou BSS qui est l'abréviation de l'expression anglo-saxonne « Base Station System ».
  Le sous-système radio est l'équipement qui assure la couverture d'une zone géographique donnée, appelée cellule, qui contient les matériels et logiciels nécessaires pour communiquer avec les stations mobiles. Fonctionnellement, ce sous-système radio est divisé entre, une fonction de contrôle assurée par un contrôleur de stations de base BSC, abréviation de l'expression anglo-saxonne « Base Station Controller », et une fonction de transmission radio supportée par les stations de base BTS, abréviation de l'expression anglo-saxonne « Base Transceiver Station ». Chaque cellule est couverte à l'aide d'une station de base. Celle-ci gère la liaison avec la station mobile à l'aide d'une interface appelée « radio interface ».
  Les relations entre les stations de base BTS et les contrôleurs de stations de base BSC sont définies par « l'interface Abis ». Les contrôleurs de stations de base BSC sont reliés au reste du réseau GSM à l'aide de « l'interface A ».
- un sous-système gestion et acheminement, ou NSS qui est l'abréviation de l'expression anglo-saxonne « Network and Switching Sub-System ».

Le sous-système gestion et acheminement est composé de trois éléments :

- le MSC (abréviation des termes anglo-saxons « Mobile-services Switching Center ») : il s'agit du commutateur du service mobile chargé de l'acheminement des communications de, et vers les mobiles dans une cellule,
- le HLR (abréviation des termes anglo-saxons « Home Location Register ») : il s'agit de la base de données où sont enregistrés les paramètres permanents d'un abonné ; le HLR contient par ailleurs l'information de localisation du mobile constamment à jour,
- le VLR (abréviation des termes anglo-saxons « Visitor Location Register ») : il s'agit de la base de donnée où est enregistrée la localisation fine du mobile en zone d'appel.

La figure 2 donne une illustration d'une configuration typique d'utilisation de stations mobiles MS, de stations de base BTS et d'un contrôleur de stations de base BSC. Plusieurs stations mobiles MS sont gérées par une station de base BTS. Plusieurs stations de base BTS sont connectées à un seul contrôleur de stations de base BSC.

La structure du réseau est de type cellulaire, c'est-à-dire que la capacité du réseau est obtenue en maillant le territoire à l'aide de cellules desservies chacune par une station de base. Une caractéristique importante d'un réseau cellulaire est la réutilisation des fréquences à travers le réseau. A cette caractéristique est associée la notion de motif de réutilisation. Le motif de réutilisation définit le nombre de cellules juxtaposées qui n'utilisent pas les mêmes fréquences.

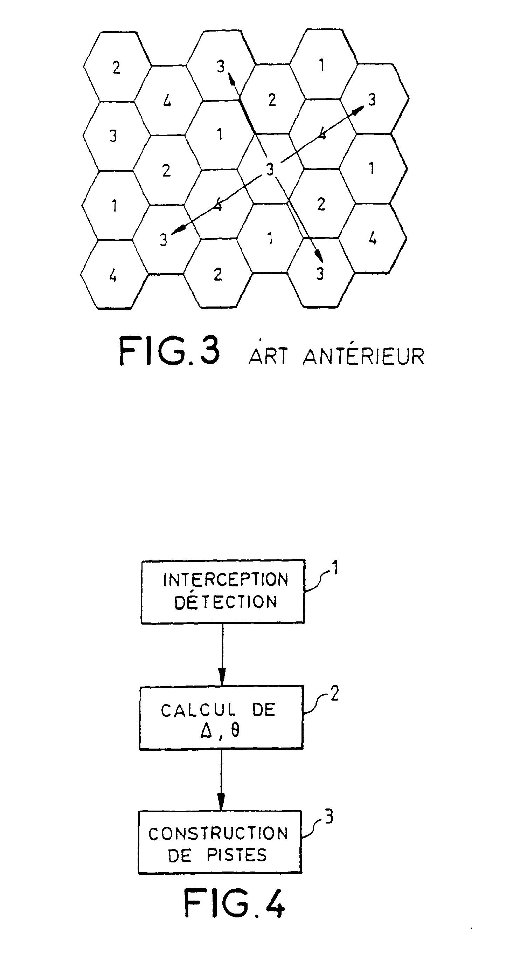

La figure 3 donne un exemple de planification d'utilisation de fréquences avec un motif de réutilisation de taille quatre. Suivant cet exemple, deux cellules utilisant la même fréquence, par exemple la fréquence numérotée trois, sont au moins distantes d'une cellule.

La taille des cellules peut varier d'une centaine de mètres à plusieurs dizaines de kilomètres. Un aéronef qui survole le réseau de radiocommunications cellulaires est susceptible d'intercepter les signaux émis dans plusieurs cellules ; voire les signaux émis par des cellules utilisant la même fréquence. Dans ces conditions, le problème se pose de savoir localiser les différents émetteurs, à partir de l'aéronef.

A cet effet, l'invention a pour objet un procédé de localisation en temps réel d'émetteurs terrestres appartenant à un réseau de radiocommunications cellulaires de type TDMA. Le procédé consiste :

- à intercepter, à partir d'un aéronef, des signaux radioélectriques et à les détecter, en mettant en oeuvre une synchronisation multi-voies, pour déterminer les différentes sources d'émission,
- à calculer simultanément un angle de site $\Delta$, et un angle d'azimut $\theta$, pour déterminer instantanément la direction d'arrivée des signaux radioélectriques des sources d'émission déterminées,
- à construire des pistes dans les zones géographiques où se situent les sources d'émission, pour estimer la position des émetteurs.

Le procédé consiste, à utiliser un réseau d'antennes réparties sur un aéronef et, à associer des techniques de synchronisation multi-capteurs à une technique de goniométrie haute-résolution, pour effectuer la localisation géographique en temps réel d'émetteurs terrestres d'un système de radiocommunications cellulaires de type TDMA.

A partir des signaux reçus sur un réseau d'antennes réparties, l'invention synchronise les émissions reçues. Les émissions reçues peuvent arriver simultanément, alors qu'elles ont été émises par des stations mobiles différentes. Le procédé de synchronisation est associé à une fonction de reconnaissance, pour pouvoir détecter les émissions issues d'une même source malgré l'imbrication possible entre les différentes émissions issues de sources différentes. Après la reconnaissance des sources d'émission, le procédé selon l'invention effectue une goniométrie à haute résolution. La goniométrie à haute résolution fournit les informations angulaires, site et azimut, de la direction d'arrivée des signaux émis par les différentes sources, dans le référentiel de l'aéronef.

L'aéronef se déplace par rapport au repère géocentrique absolu auquel sont liés les émetteurs terrestres. Son déplacement se fait suivant une certaine attitude. L'attitude est caractérisée par des angles instantanés de roulis, tangage et lacet. Le procédé utilise les informations de la centrale inertielle de l'avion, pour convertir la direction d'arrivée, des signaux émis par les sources d'émission, d'un référentiel de l'aéronef au repère géocentrique absolu, et pour calculer l'intersection de leur direction avec la terre en mettant à contribution un modèle numérique de terrain ; les points d'intersection sont appelés plots élémentaires. Dans les zones géographiques de présence de sources, le procédé construit des pistes. Les positions des émetteurs sont extraites des pistes, par exemple en localisant le maximum de densité de la piste, ou par exemple en calculant un barycentre pondéré des plots élémentaires de chaque piste.

L'invention concerne aussi un dispositif de localisation temps réel d'émetteurs radioélectriques terrestres pour la mise en oeuvre du procédé selon l'une des revendications précédentes, caractérisé en ce qu'il comprend :

- un réseau d'antennes réparties sur un aéronef, pour capter les signaux radioélectriques,
- un récepteur multi-voies, pour réceptionner les signaux de sorties du réseau d'antennes et synchroniser les signaux reçus,
- un calculateur de traitement numérique, pour traiter les signaux synchronisés, localiser les émetteurs de signaux radioélectriques captés, construire des pistes dans les zones géographiques où se situent les sources d'émission, pour estimer la position des émetteurs,
- un système de gestion horaire, pour donner une référence temporelle commune au récepteur multi-voies et au calculateur de traitement numérique,
- un système de localisation et de détection de l'assiette de l'aéronef, pour fournir l'attitude de l'avion dans le repère géocentrique absolu, au calculateur de traitement numérique.

Les émetteurs GSM pouvant fonctionner en évasion de fréquence, il est nécessaire de savoir réaliser des localisations avec peu de mesures. L'utilisation de techniques reposant sur une densité de probabilité permet d'extraire des localisations fiables grâce à la prise en compte d'erreurs sur seulement quelques plots élémentaires.

D'autres caractéristiques et avantages de l'invention apparaîtront à l'aide de la description qui suit. La description est faite en regard des figures annexées qui représentent schématiquement :

- la figure 1, un réseau de radiocommunications de type GSM selon l'art antérieur,
- la figure 2, une configuration typique d'utilisation de stations mobiles MS, de stations de base BTS et d'un contrôleur de stations de base BSC selon l'art antérieur,
- la figure 3, un exemple de planification d'utilisation de fréquences avec un motif de réutilisation de quatre selon l'art antérieur,
- la figure 4, le procédé selon l'invention sous la forme d'un organigramme,
- la figure 5, une décomposition fonctionnelle d'un dispositif mettant en oeuvre le procédé selon l'invention,
- la figure 6, un tracé du critère $P_{MUSIC}$ ($\theta$, $\Delta$) pour deux sources d'incidence, 60 degrés et 100 degrés en azimut ($\theta$), et 0 degré en site ($\Delta=0$),
- la figure 7, une goniométrie azimut-site,

- la figure 8, une première représentation d'un spectre du critère de MUSIC,
- la figure 9, une seconde représentation d'un spectre du critère de MUSIC,
- la figure 10, un exemple de maillage autour d'un plot,
- la figure 11a, un masque dit en 4-connexités,

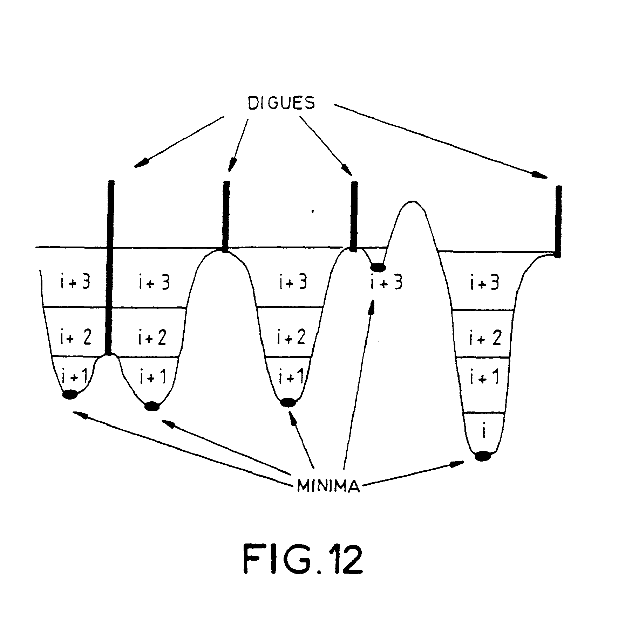

- la figure 11 b, un masque dit en 8-connexités,
- la figure 12, une illustration de la construction des lignes de partage des eaux.

Sur les différentes figures, les éléments homologues sont référencés par un même numéro.

Le procédé, selon l'invention, est présenté sous la forme d'un organigramme à la figure 4. Dans une première étape, le procédé consiste à intercepter 1, à partir d'un aéronef, des signaux radioélectriques et, à les détecter 1 en utilisant une méthode de synchronisation multi-voies pour déterminer les différentes sources d'émission. Dans une deuxième étape, à partir des signaux synchronisés, le procédé calcule 2 simultanément un angle de site $\Delta$, et un angle d'azimut $\theta$, pour déterminer instantanément la direction d'arrivée des signaux radioélectriques des sources d'émission déterminées. Le procédé calcule 2, dans le repère géocentrique absolu, l'intersection des directions d'arrivée des signaux radioélectriques, des différentes sources d'émission, avec le sol, en mettant à contribution un modèle numérique de terrain, pour déterminer la position géographique des sources d'émission dans le repère géocentrique absolu. Dans une troisième étape, le procédé construit des pistes 3 dans les zones géographiques où se situent les sources d'émission, pour estimer la position des émetteurs dans ces zones géographiques.

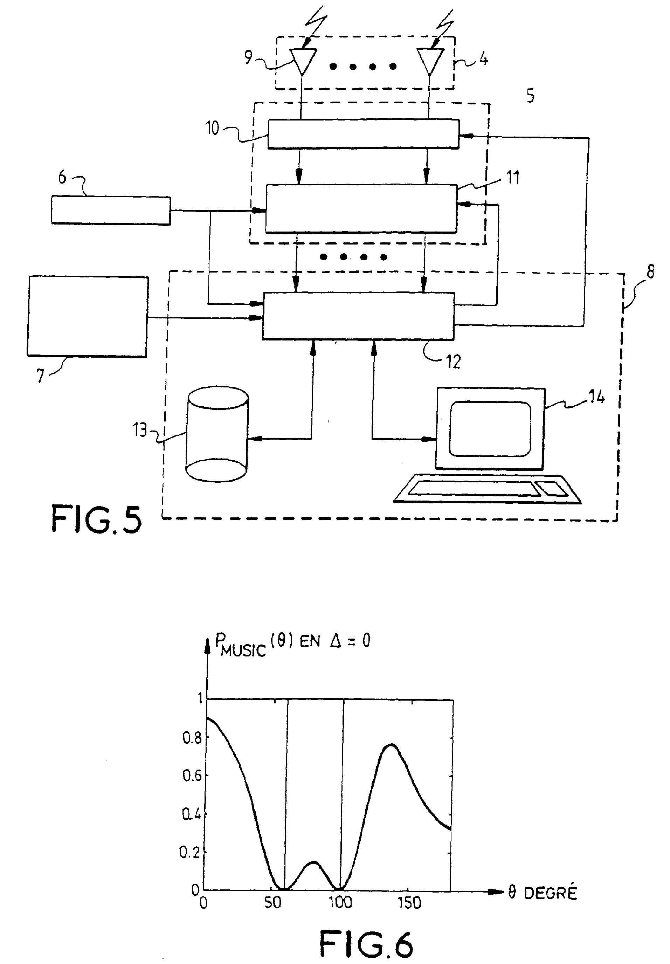

Un dispositif, mettant en oeuvre le procédé selon l'invention, est représenté à la figure 5. Il comprend un réseau d'antennes 4, un récepteur multi-voies 5, un système de gestion horaire 6, un système de localisation et de détection de l'assiette de l'aéronef 7, un calculateur de traitement numérique 8.

Le réseau d'antennes 4 consiste en des antennes 9 réparties sur l'aéronef. Ce réseau d'antennes 4 peut être désigné par la terminologie réseau d'antennes « patch ». Le réseau d'antennes 4 intercepte en entrée les signaux radioélectriques en provenance d'émetteurs radio et fournit en sortie les signaux reçus.

Le récepteur multi-voies 5 se compose d'un boîtier de tarage 10 et d'un récepteur multi-voies synchrone 11. Le boîtier de tarage 10 permet de tarer périodiquement les voies de réception radio afin de corriger les dérives relatives entre les voies. Le tarage est une fonction connue qui consiste à envoyer, avant l'acquisition de signaux, un signal de référence connu. La comparaison des sorties des voies de réception permet de déterminer les compensations relatives à introduire dans les voies de réception pour obtenir une réponse identique en sortie de chacune des voies.

Le système de gestion horaire 6 fournit une référence horaire.

Le système de localisation et de détection de l'assiette de l'aéronef 7 fournit la position et l'assiette de l'aéronef, par rapport au repère géocentrique absolu auquel sont liés les émetteurs.

Le calculateur de traitement numérique 8 comprend un équipement de contrôle et de traitement 12, une unité de stockage 13 et une interface utilisateur 14. L'unité de stockage 13 permet de stocker des données. L'interface utilisateur 14 affiche des données à un utilisateur et acquiert des données saisies par un utilisateur. Le calculateur de traitement numérique 8 effectue les fonctions suivantes :

- numérisation des signaux fournis par le récepteur multi-voies synchrone,
- stockage des signaux sur l'unité de stockage 13, avec une référence horaire commune,
- détermination de la liste des séquences de référence TSC , abréviation des termes anglo-saxons « Training Sequence Code », détectées sur le canal, ainsi que des niveaux de réception associés, et des positions de synchronisation,
- utilisation de ces positions de synchronisation afin de déterminer les angles d'arrivée,
- corrélation entre la position, l'assiette du porteur et les directions d'arrivée, afin de fournir par intersection terre des localisations élémentaires appelées plots,
- maillage d'une zone géographique et calcul de densité pour construire une image à partir des plots,
- regroupement des plots par pistage adaptatif qui affine progressivement les pistes,
- localisation des émetteurs par extraction des maxima ou calcul d'un barycentre pondéré des plots regroupés en pistes,
- affichage vers un utilisateur et acquisition de données saisies par l'utilisateur, au moyen de l'interface avec l'utilisateur 14.

Les sorties du réseau d'antennes 4 sont connectées aux entrées du boîtier de tarage 10. Les sorties du boîtier de tarage 10 sont connectées aux entrées du récepteur multi-voies synchrone 11. Le système de gestion horaire 6 a une sortie connectée au récepteur multi-voies synchrone 11 et à l'équipement de contrôle et de traitement 12, pour leur fournir une référence horaire commune. Le système de localisation et de détection de l'assiette de l'aéronef 7 est connecté à l'équipement de contrôle et de traitement 12 pour lui fournir la position et l'assiette de l'aéronef. L'équipement de contrôle et de traitement 12 est relié, par une liaison bidirectionnelle, d'une part, à l'unité de stockage 13, et, d'autre part, à l'interface utilisateur 14. L'équipement de contrôle et de traitement 12 a deux sorties, l'une est connectée au récepteur multi-voies synchrone 11 et l'autre est connectée au boîtier de tarage 10.

La première étape du traitement consiste à détecter la présence de bursts sur un canal de trafic, ou TCH abréviation des termes anglo-saxons traffic channel. Le terme burst est un terme anglo-saxon communément utilisé dans le domaine des radiocommunications. L'équivalent français, salve ou paquet, est très peu utilisé. Dans la suite de la description, seul le terme burst est utilisé. Tous les bursts d'un canal de trafic TCH sont des bursts disposant de la même structure physique : une séquence de référence de 26 symboles encadrée de deux zones de données de 58 symboles utiles.

La norme GSM prévoit l'utilisation de huit séquences différentes de référence TSC qui permettent une certaine séparation des communications utilisant la même fréquence.

Le procédé effectue une synchronisation multi-voies, en testant successivement chacune des séquences possibles et, en fournissant en sortie la position des bursts détectés et les séquences détectées.

Cette détection est effectuée dans un environnement, où le signal à détecter peut être de puissance inférieure à la puissance d'une autre émission présente sur le même canal. Pour surmonter cette difficulté, le procédé met en oeuvre une technique de synchronisation multi-voies connue et décrite dans le brevet [1] et dans la demande de brevet [2]. Cette technique permet à un modem de se synchroniser à l'aide des séquences d'apprentissage insérées dans la forme d'onde en présence de brouilleurs. Le principe de cette technique est décrit ci-dessous.

Soit d(n), n=0, ...,L, le signal complexe modulé GMSK correspondant à la séquence d'apprentissage, d'un canal de synchronisation SCH (SCH est l'abréviation des termes anglo-saxons synchronisation channel) ou d'un canal de trafic TCH, échantillonné à la fréquence Fe. La fréquence Fe n'est pas obligatoirement un multiple de la fréquence symbole.

Soit X(n), n=0,...,N, le signal multi-capteurs reçu, échantillonné à la fréquence Fe. N est tel que la durée d'acquisition soit supérieure à deux secondes ; cette durée permet d'être sûr que le message acquis est un message de type 3 et qu'il donne l'information sur l'identité de la cellule, Cell Identity suivant la terminologie anglo-saxonne. La présence d'un burst, appartenant à un canal de synchronisation SCH ou à un canal de trafic TCH, est détectée sur l'échantillon p si le critère de synchronisation multi-voies C(p) est supérieur à un seuil S. Le seuil S dépend de la probabilité de fausse alarme souhaitée :

$$C(p) = \frac{\hat{r}_{Xd}(p)^{+}.\hat{R}_{XX}^{-1}(p).\hat{r}_{Xd}(p)}{\frac{1}{N}.\sum_{n=0}^{N}|d(n)|^{2}} \tag{1}$$

avec :

$$\hat{r}_{Xd}(p) = \frac{1}{N}.\sum_{n=0}^{N}X(n+p).d^{*}(n) \tag{2}$$

$$\hat{R}_{XX}(p) = \frac{1}{N}.\sum_{n=0}^{N}X(n+p).X(n+p)^{+} \tag{3}$$

La mise en oeuvre de la synchronisation multi-voies nécessite donc, pour chaque position p testée, le calcul de $\hat{r}_{Xd}(p)$, de $\hat{R}_{XX}(p)$, de l'inverse de $\hat{R}_{XX}(p)$ et du critère $\hat{r}_{Xd}(p)^{+}.\hat{R}^{-1}{}_{XX}(p).\hat{r}_{Xd}(p)$.

Afin de limiter la puissance de calcul de la synchronisation multi-voies, la matrice $\hat{R}_{XX}(p)$ est calculée et inversée toutes les P positions, c'est-à-dire pour les positions $p_0$ telles que p, modulo P, soit nul. La matrice est calculée en effectuant la corrélation sur N+P échantillons :

$$\hat{R}_{XX}(p_0) = \frac{1}{N+P} \cdot \sum_{n=0}^{N+P} X(n+p_0).X(n+p_0)^+ \qquad (4)$$

Sur les P positions suivant la position $p_0$, le critère C(p) est calculé en utilisant $\hat{R}^{-1}_{XX}(p_0)$, le calcul de $\hat{r}_{Xd}(p)$ restant inchangé.

Lors d'une deuxième étape, le procédé effectue une goniométrie haute résolution en mettant en oeuvre, de manière préférentielle, l'algorithme de goniométrie connu MUSIC. Une description de l'algorithme MUSIC peut être trouvée dans l'article de Ro SCHMIDT ayant pour titre "A signal subspace approach to multiple emitters location and spectral estimation" et pour référence PhD THESIS, Stanford University, CA, Novembre 1981. Cet algorithme offre la possibilité de goniométrer plusieurs sources. Il existe différentes situations pour lesquelles l'émission est de type multi-sources :

- l'aéronef intercepte des signaux émis dans plusieurs cellules,
- ou, l'aéronef intercepte un signal ayant suivi plusieurs trajets ; la propagation est dite multi-trajets.

La deuxième situation est moins probable que la première, mais elle peut se produire dans un contexte urbain ou montagneux. La réception simultanée, de signaux émis dans plusieurs cellules, est d'autant plus probable que l'altitude de l'aéronef est élevée. L'algorithme MUSIC part de l'hypothèse que les signaux reçus sur les capteurs s'écrivent de la façon suivante :

$$\underline{x}(t) = \sum_{m=1}^{M} \underline{a}(\theta_m, \Delta_m) S_m(t) + \underline{b}(t) = A\,\underline{s}(t) + \underline{b}(t) \qquad (5)$$

où A est la matrice des vecteurs directeurs tel que :

$$A = \left[\underline{a}(\theta_1, \Delta_1), \ldots, \underline{a}(\theta_M, \Delta_M)\right]$$

La méthode MUSIC est basée sur la structure de la matrice de covariance $R_{XX}$, et elle suppose que le bruit $\underline{b}$(t) est spatialement blanc. C'est-à-dire que le niveau de bruit est le même sur tous les capteurs, et qu'il est décorrélé entre deux capteurs distincts. La matrice de covariance du signal $\underline{x}$(t) s'écrit de la façon suivante:

$$R_{XX} = E\left[\underline{x}(t)\underline{x}(t)^+\right] = A\,R_{SS}\,A^+ + b^2\,I_d \qquad (6)$$

où, $R_{ss}$ est la matrice de covariance du signal source $\underline{s}$(t), $b^2$ est le niveau du bruit de fond et $I_d$ est la matrice identité. Dans ces conditions, la décomposition en éléments propres de la matrice Rxx donne le résultat suivant :

$$R_{XX} = E\left[\underline{x}(t)\underline{x}(t)^+\right] = E_S L_S E_S^+ + b^2 E_b E_b^+ \qquad (7)$$

Etant donné que la matrice de covariance du bruit vaut $b^2 I_d$, alors, en combinant les relations (6) et (7), il vient :

$$A\,R_{SS}\,A^{+} = E_{S}(L_{S} - b^{2})E_{S}^{+} \tag{8}$$
$$\text{car } I_{d} = EE^{+} \quad \text{avec} \quad E = \begin{bmatrix} E_{S}E_{b} \end{bmatrix}$$

Soit M le nombre de sources. La matrice de l'espace signal $L_s$ est diagonale et a pour dimension MxM. Les vecteurs directionnels de la matrice A sont des combinaisons linéaires des vecteurs propres de l'espace signal Es, d'après la relation (8). La décomposition en éléments propres de $R_{xx}$ montre que les vecteurs propres des matrices $E_s$ et $E_b$ sont orthogonaux. Par conséquent, les vecteurs directeurs de la matrice A sont orthogonaux à ceux de l'espace bruit $E_b$. Ainsi, pour toutes les sources incidentes d'incidence ($\theta_m$, $\Delta_m$), il est possible d'écrire la relation suivante :

$$\underline{a}(\theta_m, \Delta_m)^{+} E_b = \underline{0} \quad \text{pour } 1 \leq m \leq M \tag{9}$$

La recherche des incidences ($\theta_m$,$\Delta_m$) consiste à minimiser, suivant $\theta$ et $\Delta$, le critère suivant :

$$P_{MUSIC}(\theta, \Delta) = \frac{\underline{a}(\theta, \Delta)^{+} E_b E_b^{+} \quad \underline{a}(\theta, \Delta)}{\underline{a}(\theta, \Delta)^{+} \underline{a}(\theta, \Delta)} \tag{10}$$

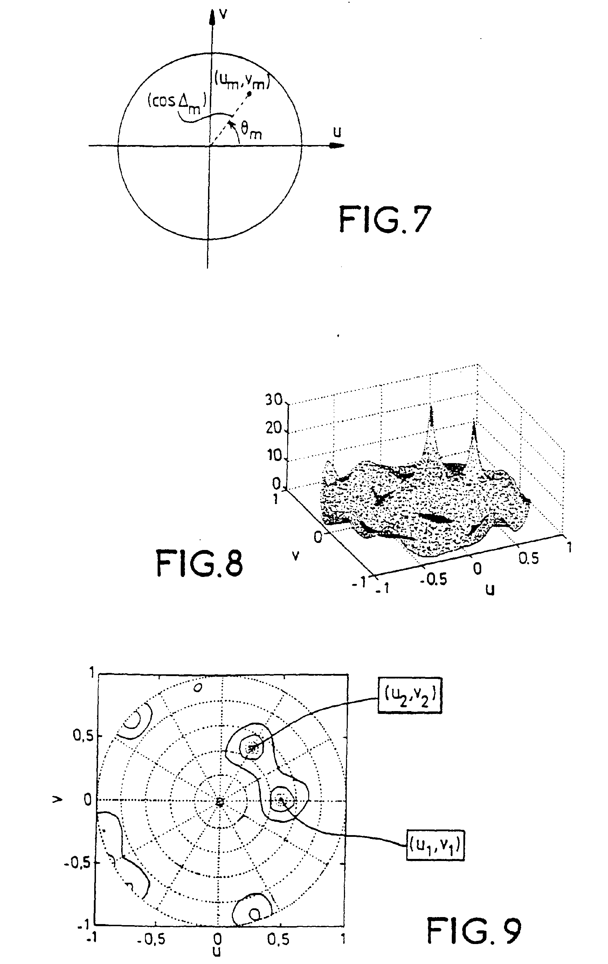

Lorsque les conditions sont idéales, la fonction $P_{MUSIC}(\theta,\Delta)$ s'annule pour tous les angles ($\theta_m$,$\Delta_m$) des sources incidentes. L'expression de cette fonction permet d'affirmer qu'elle est normalisée entre 0 et 1.
La figure 6 représente le tracé du critère $P_{MUSIC}(\theta,\Delta)$ pour deux sources d'incidence, 60 degrés et 100 degrés en azimut, et 0 degré en site ($\Delta$=0). Comme prévu, le critère s'annule pour $\theta$=60 et $\theta$ = 100 degrés. Toutefois, lorsque la matrice de covariance est calculée sur un temps d'intégration fini, et que le vecteur directeur $\underline{a}(\theta, \Delta)$ n'est pas connu de façon parfaite, les minima du critère n'atteignent pas exactement 0. Dans ces conditions, la goniométrie consiste à prendre les M minima de ce critère. La goniométrie est considérée comme valable, lorsque les minima du critère sont en dessous d'un seuil ; par exemple ce seuil est fixé à 0,1.
La goniométrie azimut-site, illustrée par la figure 7, se fait dans l'espace (u, v), avec u=cos($\Delta$)cos($\theta$) et v=cos($\Delta$)sin($\theta$) les coordonnées du vecteur d'onde. En effet, la précision d'estimation des paramètres ($U_m$, $V_m$) est indépendante de leur position. Sur les figures 8 et 9 est représenté le spectre du critère de MUSIC en présence de deux sources d'incidence : $\theta_1 = 0°$ et $\Delta_1 = 60°$ soit, $u_1 = 0,5$ et $v_1 = 0$, et, $\theta_2 = 60°$ et $\Delta_2 = 60°$ soit, $u_2 = 0,25$ et $v_2 = 0,43$.
Le tracé du spectre de la fonction $-10\log_{10}[P_{MUSIC}(u,v)]$, dont les figures 8 et 9 donnent deux représentations différentes, permet d'effectuer la goniométrie en cherchant les pics du tracé de cette fonction.
Les angles de site $\Delta_m$ et d'azimut $\theta_m$, déterminés par la méthode de goniométrie haute résolution sont corrigés, en prenant en compte l'assiette et l'orientation de l'aéronef. L'assiette et l'orientation de l'aéronef sont fournies par la centrale inertielle de l'aéronef. La correction est effectuée en prélevant régulièrement la mesure de l'attitude de l'aéronef. L'attitude de l'aéronef est exprimée suivant les angles instantanés de roulis, tangage et lacet.
Les valeurs corrigées des angles de site et d'azimut sont converties en des positions géographiques, appelées plots élémentaires. Les angles de site $\Delta_m$ et d'azimut $\theta_m$ corrigés sont donnés dans le repère des antennes relatif à l'aéronef. La conversion consiste à les transformer en des angles de site et d'azimut relatifs au repère géocentrique absolu. Les positions géographiques sont obtenues en effectuant l'intersection de la direction d'arrivée, associée à un angle de site et un angle d'azimut exprimés dans le repère géocentrique absolu, avec un modèle numérique du terrain. Les points d'intersection sont appelés plots élémentaires.
La troisième étape consiste à localiser les émetteurs à partir des plots élémentaires par des techniques de pistage.
Une caractéristique des émetteurs GSM est que chaque alternat de communication utilise un ensemble de paliers dont la fréquence est aléatoire. Les techniques de pistage radio-géographique habituelles ne peuvent s'adapter à cette inconstance de la fréquence. Seules des techniques de pistage adaptatif sont utilisables. Les mesures utilisées, pour la recherche des émetteurs GSM, sont les mesures élémentaires sorties de la chaîne de mesure bord, c'est-à-dire les plots élémentaires.
Les émissions GSM possèdent des marquants techniques, qui sont exploités pour regrouper les mesures élémentaires avant la localisation fine. Le pistage adaptatif utilise des techniques de traitement d'image pour effectuer un regroupement par une segmentation géographique des mesures élémentaires.

Les techniques de traitement d'images consistent en, une opération de maillage, un calcul de densité de probabilité géographique, des opérations de filtrage et des opérations de segmentation par une construction de lignes de partage des eaux.

L'opération de maillage effectue le maillage géographique des zones géographiques où sont situés les plots élémentaires.

Le calcul de densité de probabilité consiste à déterminer la loi conditionnelle du vecteur à estimer, connaissant le vecteur de mesures. Deux types de méthodes de calcul sont utilisables :

- une méthode avec histogramme des mesures,
- une méthode avec une hypothèse de loi normale : la matrice de covariance du vecteur de mesures est connu, et par hypothèse, le vecteur de mesures suit une loi normale centrée.

Une troisième méthode existe mais elle est plus coûteuse en temps de calcul : il s'agit du calcul fin de densité par le test de Monte-Carlo.

Dans un premier mode de réalisation du procédé, la méthode utilisée pour le calcul de la densité consiste à calculer un histogramme des mesures. Le calcul de l'histogramme des mesures est effectué sur un espace d'état. Si, par exemple, les mesures sont les intersections avec la terre, et si l'espace d'état est la localisation à la surface de la terre, alors, à chaque nouvelle mesure, la case du maillage de l'espace d'état où se trouve la mesure est incrémentée d'une unité. Par exemple, une maille, dans laquelle se trouvent trois mesures, a une densité de trois.

Dans un deuxième mode de réalisation du procédé, la méthode utilisée pour le calcul de la densité consiste à supposer que le vecteur de mesures suit une loi normale centrée. Ce calcul de densité est particulièrement adapté aux faibles volumes de mesures générés par des émetteurs peu actifs. La matrice de covariance du vecteur de mesures est connue. Le vecteur de mesures est supposé suivre une loi normale centrée. Chaque case du maillage de l'espace d'état est incrémenté de la valeur de la densité conditionnelle. Si, par exemple, les mesures sont les intersections avec la terre, et si l'espace d'état est la localisation à la surface de la terre, alors, à chaque nouvelle mesure, chaque case i du maillage de l'espace d'état est incrémentée d'une valeur $p_1$. En prenant comme notation, pour une mesure : $(x_m, y_m)$, pour les coordonnées de la case i : $(x_1, y_1)$ et pour la matrice de covariance de la mesure :

$$\sum = \begin{pmatrix} \sigma_x^2 & \sigma_{xy} \\ \sigma_{xy} & \sigma_y^2 \end{pmatrix} \text{ et } \sum^{-1} = \begin{pmatrix} \omega_{11} & \omega_{12} \\ \omega_{21} & \omega_{22} \end{pmatrix} \tag{11}$$

alors la valeur $p_i$ s'exprime par la relation :

$$p_i = A.\exp\left\{ -\frac{1}{2} (x_i - x_m \quad y_i - y_m)\sum^{-1}\begin{pmatrix} x_i & - & x_m \\ y_i & - & y_m \end{pmatrix} \right\} \tag{12}$$

avec :

$$A = \frac{1}{2\pi(\det \sum)^{\frac{1}{2}}} \tag{13}$$

soit :

$$p_i = A.\exp\left\{-\frac{1}{2}\left[(B+C)\right]\right\} \tag{14}$$

avec :

$$B = (x_i - x_m)^2 w_{11} + (y_i - y_m)^2 w_{22} \tag{15}$$

$$C = (x_i - x_m)(y_i - y_m)(\omega_{12} + \omega_{21}) \tag{16}$$

Il peut se poser, des problèmes de quantification dû à un maillage trop grossier, ou des problèmes de nombre de calculs trop important dû à un maillage trop fin. Pour éviter ces problèmes, la distance entre deux mailles successives est préférentiellement fixée à N fois (1≤ N ≤3) un écart-type « moyen », sigma, de mesures prises sur l'ensemble des plots élémentaires.

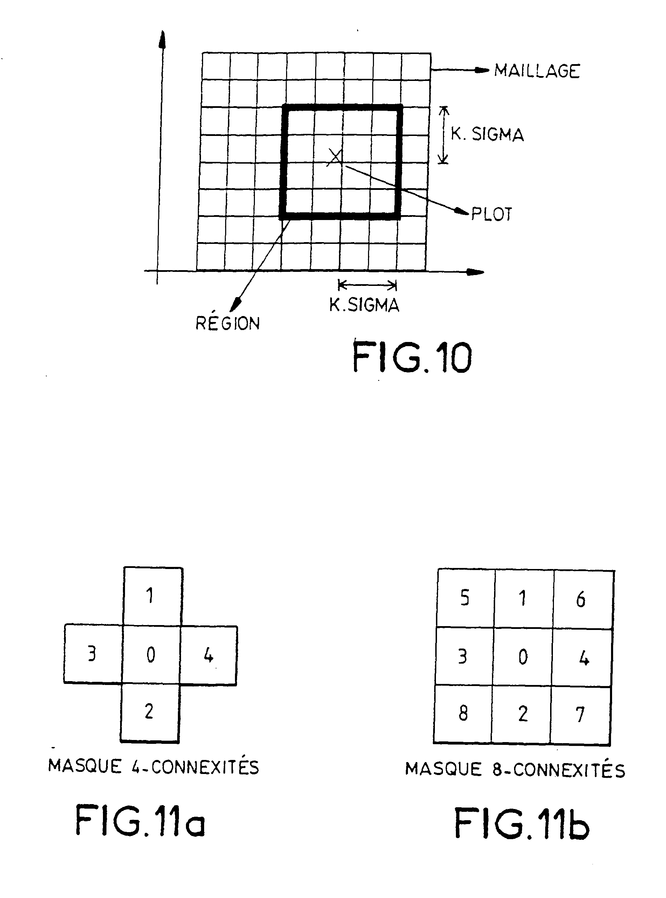

La figure 10 illustre le maillage autour d'un plot élémentaire.

Pour un plot donné, tout le maillage n'est pas parcouru car de nombreuses valeurs de probabilité sont quasi-nulles. Seule est parcourue une région autour du plot dont les bords correspondent à K x sigma, K = 3 de préférence.

La densité géographique calculée ci-dessus peut présenter des discontinuités indésirables pour les traitements de pistage adaptatif. Pour cette raison, un ensemble de modules de filtrage est utilisé. Le filtrage effectué par un module est, soit linéaire, soit morphologique.

Le but de ces traitements de filtrage est, d'éliminer l'information inutile dans une image de densité, ou, de mettre en valeur certaines régions, par l'utilisation de filtres linéaires et/ou morphologiques. Le choix du filtrage à effectuer se fait en fonction de la dispersion des mesures sur la zone géographique à exploiter.

Pour des filtres linéaires, un masque définissant la zone locale de travail est utilisé. Cette zone locale est centrée sur chaque maille de la région géographique à traiter. La zone locale définit les voisins géographiques à considérer pour cette maille. La figure 11a illustre un masque dit, en 4-connexités ; la zone locale, centrée sur une maille notée 0, comprend quatre voisins notés 1, 2, 3 et 4. La figure 11b illustre un masque dit, en 8-connexités ; la zone locale, centrée sur une maille notée 0, comprend huit voisins notés 1, 2, ..., 8.

Quel que soit le filtre linéaire, c'est-à-dire quel que soit le masque, le principe de sa mise en oeuvre est le même. Seule la combinaison réalisée à partir des valeurs des voisins change. Le principe consiste, à remplacer la valeur de la maille centrale, notée 0, par une combinaison linéaire des mailles voisines, et, à répéter l'opération pour chacune des mailles de la région géographique.

Différents types de filtre linéaire peuvent être mis en oeuvre. En particulier :

un type appelé filtre moyen : la combinaison réalisée consiste à calculer la moyenne des voisins de la maille centrale,
un type appelé filtre médian : la combinaison réalisée consiste à trier les valeurs des mailles voisines par ordre croissant, et à affecter à la maille centrale la valeur de la maille médiane de la liste triée ; soit la valeur cinq pour une liste d'indices allant de zéro à huit,
un type appelé filtre pondérateur : la combinaison réalisée consiste à appliquer un coefficient multiplicatif à chaque valeur de voisin en fonction de son éloignement par rapport à la maille centrale ; ceci permet de restituer une influence décroissante des voisins en utilisant des coefficients pondérateurs décroissants,
un type appelé filtre quantificateur : ce filtre n'utilise pas la notion de voisinage. Il permet de transformer une image de densité en imposant, au gré de l'utilisateur, un nombre fini de valeurs autorisées pour les mailles,
un type appelé filtre par seuillage : une représentation visuelle de la répartition des valeurs des mailles entre la valeur minimale et la valeur maximale, par tranche de 10% est utilisée. Le choix d'un seuil est effectué ; en dessous de ce seuil les mailles prennent la valeur zéro, les mailles au-dessus restent inchangées.

Les filtres morphologiques, issus de la morphologie mathématique, font appel à un élément structurant similaire au masque des filtres linéaires. La différence, par rapport aux filtres linéaires, réside dans le fait que l'on compare l'image que l'on souhaite analyser avec une forme connue qui est l'élément structurant. Cet élément est à adapter en fonction des formes que l'on souhaite traiter. Différents types de filtre morphologique peuvent être mis en oeuvre. En particulier :

un type appelé érosion : le principe utilisé est de retenir tous les x de l'espace tels qu'en x tout l'élément structurant est contenu dans la forme de la figure. Dans le cas d'une image à niveaux de gris ou en couleurs, l'algorithme utilise un masque 8-connexités pour chaque maille et affecte à la maille centrale la valeur minimale du voisinage,

un type appelé dilatation : l'opération de dilatation est duale de celle d'érosion. Pour chaque maille, la valeur maximale du voisinage est retenue,

un type appelé ouverture : l'ouverture est définie à partir des opérateurs de base que sont l'érosion et la dilatation. On calcule d'abord l'érodé de la densité d'origine, puis la dilatation du résultat obtenu. Le résultat est une densité privée des aspérités étroites et des caps étroits de l'image,

un type appelé fermeture : la fermeture est constituée d'une dilatation de la densité d'origine à laquelle est appliquée une érosion. La conséquence est la suppression des petites enclaves fournies en entrée.

Les filtres ouverture et fermeture ont un avantage remarquable ; une seule application des filtres est nécessaire car les filtres sont idempotents. Ceci signifie que, contrairement à l'érosion et à la dilatation, une répétition de ces filtres est inutile, car le résultat obtenu après répétition est identique au résultat obtenu après la première application.

Les traitements de filtrage ont pour autre caractéristique de pouvoir être exécutés rapidement ; ils nécessitent une seule exploration de l'image. Ils peuvent être utilisés à tout moment de l'exploitation pour améliorer une densité calculée.

A partir de l'image de densité préalablement filtrée, l'opération de segmentation construit dans l'image des lignes de partage des eaux, de façon à délimiter des zones d'influence. Chaque zone constitue une piste, de sorte qu'au terme de cette opération, J pistes, correspondant à J régions, sont disponibles.

Une image numérique $I_n$ peut être modélisée comme étant un ensemble de mailles, ou pavés assimilés à des points élémentaires d'une image réelle ; les pavés peuvent être considérés comme étant équivalents à des pixels. La notion de bassin versant C(M) associé à un minimum M est défini par, l'ensemble des pixels ou des mailles p de $I_n$ tels qu'une goutte d'eau tombant en p coule le long du relief de $I_n$ en suivant un chemin descendant qui l'amène au minimum M.

Les lignes, qui séparent les différents bassins versants C(M), constituent une ligne de partage des eaux notée LPE.

La figure 12 illustre la construction des lignes de partage des eaux. D'un point de vue topographique, l'image $I_n$ est considérée comme une surface dont chacun des minima a été percé d'un trou. Cette surface est lentement immergée dans un plan d'eau, supposé infini pour la commodité de l'explication. L'eau remplit progressivement les bassins versants de $I_n$ en passant par ces minima troués, et en particulier par ceux de plus faible altitude. A tout moment de l'inondation, les différents lacs délimités sur la topographie sont à la même altitude. Une digue est construite à chaque endroit où les eaux en provenance de deux minima distincts se rejoignent. A l'issue de la procédure d'immersion, chaque minimum est complètement entouré par une digue qui délimite le bassin versant associé. La segmentation en régions ainsi obtenue est celle des bassins versants. L'ensemble des digues définit la ligne de partage des eaux. Un algorithme connu de construction de lignes de partage des eaux est décrit dans le document [3].

La méthode de création des pistes, utilisée pour la localisation d'émetteurs GSM, est progressive et adaptative.

La méthode peut se dérouler suivant plusieurs niveaux. A chaque niveau, le but est d'affiner l'ensemble des pistes générées lors des niveaux précédents. Au niveau 1, la méthode consiste à élaborer un premier ensemble de pistes, par les techniques préalablement décrites. Au niveau 2, l'ensemble des J pistes est examiné, dans le but de créer des pistes supplémentaires, lorsque cela est possible, ou dans le but d'augmenter la précision des pistes existantes.

Au premier niveau, les mesures élémentaires les plus fiables sont sélectionnées par tri ; le tri repose sur des ellipses d'incertitude associées aux plots élémentaires. Le seuil imposé lors de ce tri est adapté au volume des mesures disponibles. Une sélection draconienne limite les possibilités de traitement en fournissant peu d'informations. Inversement, une sélection moins sévère est une source d'imprécision des localisations finales. Un calcul de densité est effectué sur la zone géographique maillée. Le calcul de densité par hypothèse loi normale est particulièrement adapté à un faible volume de mesures générées par des émetteurs peu actifs. Une segmentation, par une construction de lignes de partage des eaux est effectuée, sur l'image de densité. Cette segmentation délimite différentes zones d'influence. Chaque zone constitue une piste, de telle sorte qu'à l'issue du premier niveau J pistes sont disponibles ; les J pistes correspondent aux J régions.

Chacune des J pistes est réexaminée au niveau suivant dans le but d'augmenter sa précision, ou dans le but de créer de nouvelles pistes. Pour chaque piste construite une sélection des mesures est effectuée ; la sélection est basée sur la valeur des ellipses d'incertitude. La sélection permet une partition en deux sous-ensembles, de l'ensemble des mesures de la piste ; la partition est adaptée au nombre de mesures disponibles. Le seuil de sélection est réglé automatiquement, en fonction de la plage de variation des ellipses d'incertitude des mesures de la piste considérée. Sur les mesures sélectionnées, le procédé effectue un calcul de densité, sur la zone réduite délimitée par les coordonnées géographiques des mesures. Il est possible de détecter de nouvelles pistes, en utilisant de nouveau une segmentation par ligne de partage des eaux sur la densité réduite de chaque piste. Si l'opération de segmentation détecte plusieurs régions, de nouvelles pistes sont créées. Chaque nouvelle piste est alors constituée d'une partie des mesures de la piste d'origine. Par contre, si une seule région est mise en évidence, seule la précision de cette piste est améliorée grâce à la sélection effectuée sur les mesures de cette piste.

Le nombre de niveaux de cette méthode est variable, en fonction du degré de complexité du problème.

La localisation fine, effectuée après le pistage, consiste à détecter les maxima de densité de chaque piste ou à calculer le barycentre pondéré des mesures élémentaires (ou plots élémentaires) de chaque piste. La localisation fine donne la position des émetteurs avec une ellipse d'incertitude associée.

**ANNEXE A**

Références

[1] Brevet français délivré sous le n˚ 2 715 488 au nom de la demanderesse ayant pour titre : « Procédé et dispositif permettant à un modem de se synchroniser sur un transmetteur de données numériques par voie hertzienne en présence de brouilleurs » et pour inventeurs Pascal Chevalier et François Pipon.

[2] Demande de brevet français publié sous le n˚ 2 766 320 au nom de la demanderesse ayant pour titre : « Procédé et dispositif d'analyse des interférences dans un système de radiocommunications cellulaires de type GSM ou DCS 1800 » et pour inventeurs Jean-Jacques Monot, François Pipon et Frédérique Lasnier.

[3] « Morphologie mathématique » de M.Schmitt et J.Mattioli de Thomson-CSF, référence ASRF-92-2.

**Revendications**

1. Procédé de localisation en temps réel d'émetteurs terrestres appartenant à un réseau de radiocommunications cellulaires de type TDMA, **caractérisé en ce qu'**il consiste :

    - à intercepter (1), à partir d'un aéronef, des signaux radioélectriques et à les détecter (1), en mettant en oeuvre une synchronisation multi-voies, pour déterminer les différentes sources d'émission, en détectant la présence de bursts de traffic (TCH) en reconnaissant des séquences d'apprentissage présentes dans les formes d'onde
    - à calculer (2) simultanément un angle de site ($\Delta$), et un angle d'azimut ($\theta$), pour déterminer instantanément la direction d'arrivée des signaux radioélectriques des sources d'émission déterminées,
    - à construire des pistes (3) dans les zones géographiques où se situent les sources d'émission, pour estimer la position des émetteurs.

2. Procédé de localisation temps réel d'émetteurs terrestres selon la revendication 1, **caractérisé en ce qu'**il consiste :

    - à calculer (2), dans le repère géocentrique absolu, l'intersection des directions d'arrivée des signaux radioélectriques, des différentes sources d'émission, avec le sol, en mettant à contribution un modèle numérique de terrain, pour déterminer la position géographique des sources d'émission,

3. Procédé de localisation temps réel d'émetteurs terrestres selon l'une quelconque des revendications 1 et 2, **caractérisé en ce que** les formes d'onde utilisent la norme GSM ou la norme DCS1800, pour synchroniser les signaux radioélectriques.

4. Procédé de localisation temps réel d'émetteurs terrestres selon l'une quelconque des revendications 1 à 3, **caractérisé en ce qu'**il consiste à mettre en oeuvre une goniométrie haute résolution, pour déterminer l'incidence ($\theta_m$, $\Delta_m$) de la direction d'arrivée des signaux radioélectriques dans un repère de l'aéronef.

5. Procédé de localisation temps réel d'émetteurs terrestres selon la revendication 4, **caractérisé en ce que** la goniométrie est de type MUSIC et la recherche des incidences ($\theta_m,\Delta_m$) consiste à minimiser, suivant l'azimut ($\theta$) et le site ($\Delta$), le critère de MUSIC : $P_{MUSIC}(\theta, \Delta)$.

6. Procédé de localisation temps réel d'émetteurs terrestres selon l'une quelconque des revendications 4 et 5, **caractérisé en ce qu'**il consiste à convertir l'incidence ($\theta$, $\Delta$), déterminée dans le repère de l'aéronef, dans le repère géocentrique absolu en tenant compte de l'attitude de l'aéronef.

7. Procédé de localisation temps réel d'émetteurs terrestres selon l'une quelconque des revendications 1 à 6, **caractérisé en ce qu'**il consiste à calculer la densité de probabilité en mettant en oeuvre une méthode d'histogramme des mesures, les mesures étant les points d'intersection avec le sol.

8. Procédé de localisation temps réel d'émetteurs terrestres selon l'une quelconque des revendications 1 à 7, **caractérisé en ce qu'**il consiste à filtrer la densité de probabilité en mettant en oeuvre un filtre linéaire.

9. Procédé de localisation temps réel d'émetteurs terrestres selon l'une quelconque des revendications 1 à 7, **caractérisé en ce qu'**il consiste à filtrer la densité de probabilité en mettant en oeuvre un filtre morphologique.

10. Procédé de localisation temps réel d'émetteurs terrestres selon l'une quelconque des revendications 1 à 9, **caractérisé en ce qu'**il consiste à segmenter les images de densité en construisant des lignes de partage des eaux, pour construire des pistes.

11. Utilisation à bord d'un aéronef de moyens de traitement (4, 5, 6, 7, 8) de signaux radioélectriques provenant d'émetteurs radioélectriques terrestres, appartenant à un réseau de radiocommunications cellulaires de type TDMA, pour la mise en oeuvre du procédé selon l'une quelconque des revendications précédentes.

12. Dispositif de localisation temps réel d'émetteurs radioélectriques terrestres pour la mise en oeuvre du procédé selon l'une des revendications précédentes, **caractérisé en ce qu'**il comprend :

- un réseau d'antennes (4) réparties sur un aéronef, pour capter les signaux radioélectriques,
- un récepteur multi-voies (5), pour réceptionner les signaux de sorties du réseau d'antennes (4) et synchroniser les signaux reçus,
- un calculateur de traitement numérique (8), pour traiter les signaux synchronisés, localiser les émetteurs de signaux radioélectriques captés, construire des pistes dans les zones géographiques où se situent les sources d'émission, pour estimer la position des émetteurs,
- un système de gestion horaire (6), pour donner une référence temporelle commune au récepteur multi-voies (5) et au calculateur de traitement numérique (8),
- un système de localisation et de détection de l'assiette de l'aéronef (7), pour fournir l'attitude de l'avion dans le repère géocentrique absolu, au calculateur de traitement numérique (8).

**Claims**

1. Method of real-time location of terrestrial transmitters belonging to a cellular radio communications network of TDMA type, **characterized in that** it consists:

- in intercepting (1), from an aircraft, radioelectric signals and in detecting them (1), by implementing a multichannel synchronization, to determine the various transmission sources, by detecting the presence of traffic bursts (TCH) by recognizing learning sequences present in the waveforms
- in calculating (2) simultaneously an angle of elevation ($\Delta$), and an angle of azimuth ($\theta$), so as to instantaneously determine the direction of arrival of the radioelectric signals from the transmission sources determined,
- in constructing tracks (3) in the geographical zones where the transmission sources are situated, so as to estimate the position of the transmitters.

2. Method of real-time location of terrestrial transmitters according to Claim 1, **characterized in that** it consists:

- in calculating (2), within an absolute geocentric reference frame, the intersection of the directions of arrival of the radioelectric signals, of the various transmission sources, with the ground, by using a digital terrain model, to determine the geographical position of the transmission sources.

3. Method of real-time location of terrestrial transmitters according to any one of Claims 1 and 2, **characterized in that** the waveforms use the GSM standard or the DCS1800 standard, to synchronize the radioelectric signals.

4. Method of real-time location of terrestrial transmitters according to any one of Claims 1 to 3, **characterized in that** it consists in executing a high-resolution goniometry, to determine the incidence ($\theta_m$, $\Delta_m$) of the direction of arrival of the radioelectric signals in a reference frame of the aircraft.

5. Method of real-time location of terrestrial transmitters according to Claim 4, **characterized in that** the goniometry is of MUSIC type and the search for the incidences $(\theta_m, \Delta_m)$ consists in minimizing, according to the azimuth $(\theta)$ and the elevation $(\Delta)$, the MUSIC criterion: $P_{MUSIC}(\theta, \Delta)$.

6. Method of real-time location of terrestrial transmitters according to any one of Claims 4 and 5, **characterized in that** it consists in converting the incidence $(\theta, \Delta)$, determined in the reference frame of the aircraft, into the absolute geocentric reference frame by taking account of the attitude of the aircraft.

7. Method of real-time location of terrestrial transmitters according to any one of Claims 1 to 6, **characterized in that** it consists in calculating the probability density by using a histogram procedure for the measurements, the measurements being the points of intersection with the ground.

8. Method of real-time location of terrestrial transmitters according to any one of Claims 1 to 7, **characterized in that** it consists in filtering the probability density by implementing a linear filter.

9. Method of real-time location of terrestrial transmitters according to any one of Claims 1 to 7, **characterized in that** it consists in filtering the probability density by implementing a morphological filter.

10. Method of real-time location of terrestrial transmitters according to any one of Claims 1 to 9, **characterized in that** it consists in segmenting the density images by constructing watershed lines, to construct tracks.

11. Use aboard an aircraft of means of processing (4, 5, 6, 7, 8) of radioelectric signals originating from terrestrial radioelectric transmitters, belonging to a cellular radio communications network of TDMA type, for the implementation of the method according to any one of the preceding claims.

12. Device for real-time location of terrestrial radioelectric transmitters for the implementation of the method according to one of the preceding claims, **characterized in that** it comprises:

  - a network of antennas (4) distributed over an aircraft, for picking up the radioelectric signals,
  - a multichannel receiver (5), for receiving the output signals from the network of antennas (4) and synchronizing the signals received,
  - a digital processor (8) for processing the synchronized signals, locating the transmitters of radioelectric signals picked up, constructing tracks in the geographical zones where the transmission sources are situated, so as to estimate the position of the transmitters,
  - a time management system (6) for giving a time reference that is common to the multichannel receiver (5) and to the digital processor (8),
  - a system for locating and detecting the trim of the aircraft (7), so as to provide the attitude of the aeroplane in the absolute geocentric reference frame, to the digital processor (8).

**Patentansprüche**

1. Verfahren zur Echtzeit-Lokalisierung von terrestrischen Sendern, die zu einem zellularen Funkverkehrsnetz vom Typ TDMA gehören, **dadurch gekennzeichnet, dass** es darin besteht:

  - ausgehend von einem Luftfahrzeug unter Verwendung einer Mehrkanal-Synchronisation Funksignale aufzufangen (1) und sie zu erfassen (1), um die verschiedenen Sendequellen zu bestimmen, indem das Vorhandensein von Traffic-Bursts (TCH) erfasst wird, indem in den Wellenformen vorhandene Lernsequenzen erkannt werden,
  - gleichzeitig einen Elevationswinkel $(\Delta)$ und einen Azimutwinkel $(\theta)$ zu berechnen (2), um sofort die Empfangsrichtung der Funksignale von den bestimmten Sendequellen zu bestimmen,
  - in den geographischen Zonen, in denen sich die Sendequellen befinden, Spuren zu bilden (3), um die Position der Sender zu schätzen.

2. Verfahren zur Echtzeit-Lokalisierung von terrestrischen Sendern nach Anspruch 1, **dadurch gekennzeichnet, dass** es darin besteht:

  - im absoluten geozentrischen Koordinatensystem die Schnittstelle der Empfangsrichtungen der Funksignale der verschiedenen Sendequellen mit dem Boden zu berechnen (2), indem ein digitales Geländemodell in Anspruch genommen wird, um die geographische Position der Sendequellen zu bestimmen.

3. Verfahren zur Echtzeit-Lokalisierung von terrestrischen Sendern nach einem der Ansprüche 1 und 2, **dadurch gekennzeichnet, dass** die Wellenformen die Norm GSM oder die Norm DCS1800 verwenden, um die Funksignale zu synchronisieren.

4. Verfahren zur Echtzeit-Lokalisierung von terrestrischen Sendern nach einem der Ansprüche 1 bis 3, **dadurch gekennzeichnet, dass** es darin besteht, eine Goniometrie hoher Auflösung zu verwenden, um den Einfallwinkel ($\theta_m$, $\Delta_m$) der Empfangsrichtung der Funksignale in einem Koordinatensystem des Luftfahrzeugs zu bestimmen.

5. Verfahren zur Echtzeit-Lokalisierung von terrestrischen Sendern nach Anspruch 4, **dadurch gekennzeichnet, dass** die Goniometrie vom Typ MUSIC ist, und die Suche der Einfallwinkel ($\theta_m$, $\Delta_m$) darin besteht, das MUSIC-Kriterium: $P_{MUSIC}(\theta, \Delta)$ gemäß dem Azimutwinkel ($\theta$) und dem Elevationswinkel ($\Delta$) zu minimieren.

6. Verfahren zur Echtzeit-Lokalisierung von terrestrischen Sendern nach einem der Ansprüche 4 und 5, **dadurch gekennzeichnet, dass** es darin besteht, den im Koordinatensystem des Luftfahrzeugs bestimmten Einfallwinkel ($\theta$, $\Delta$) unter Berücksichtigung der Fluglage des Luftfahrzeugs in das absolute geozentrische Koordinatensystem zu konvertieren.

7. Verfahren zur Echtzeit-Lokalisierung von terrestrischen Sendern nach einem der Ansprüche 1 bis 6, **dadurch gekennzeichnet, dass** es darin besteht, die Wahrscheinlichkeitsdichte unter Verwendung einer Histogramm-Methode der Messungen zu berechnen, wobei die Messungen die Schnittpunkte mit dem Boden sind.

8. Verfahren zur Echtzeit-Lokalisierung von terrestrischen Sendern nach einem der Ansprüche 1 bis 7, **dadurch gekennzeichnet, dass** es darin besteht, die Wahrscheinlichkeitsdichte unter Verwendung eines linearen Filters zu filtern.

9. Verfahren zur Echtzeit-Lokalisierung von terrestrischen Sendern nach einem der Ansprüche 1 bis 7, **dadurch gekennzeichnet, dass** es darin besteht, die Wahrscheinlichkeitsdichte unter Verwendung eines morphologischen Filters zu filtern.

10. Verfahren zur Echtzeit-Lokalisierung von terrestrischen Sendern nach einem der Ansprüche 1 bis 9, **dadurch gekennzeichnet, dass** es darin besteht, die Dichtebilder zu segmentieren, indem Wasserscheiden gebildet werden, um Spuren zu bilden.

11. Verwendung von Verarbeitungsmitteln (4, 5, 6, 7, 8) von Funksignalen, die von zu einem zellularen Funkverkehrsnetz vom Typ TDMA gehörenden terrestrischen Funksendern stammen, an Bord eines Luftfahrzeugs zur Anwendung des Verfahrens nach einem der vorhergehenden Ansprüche.

12. Vorrichtung zur Echtzeit-Lokalisierung von terrestrischen Funksendern zur Anwendung des Verfahrens nach einem der vorhergehenden Ansprüche, **dadurch gekennzeichnet, dass** sie aufweist:

- ein Netz von Antennen (4), die über ein Luftfahrzeug verteilt sind, um die Funksignale aufzufangen,
- einen Mehrkanalempfänger (5), um die Ausgangssignale des Antennennetzes (4) zu empfangen und die empfangenen Signale zu synchronisieren,
- einen digitalen Verarbeitungsrechner (8), um die synchronisierten Signale zu verarbeiten, die Sender von aufgefangenen Funksignalen zu lokalisieren, Spuren in den geographischen Zonen zu bilden, wo sich die Sendequellen befinden, um die Position der Sender zu schätzen,
- ein Zeitplanverwaltungssystem (6), um einen dem Mehrkanalempfänger (5) und dem digitalen Verarbeitungsrechner (8) gemeinsamen Zeitbezug anzugeben,
- ein System zur Lokalisierung und zur Erfassung der Trimmlage des Luftfahrzeugs (7), um die Fluglage des Flugzeugs im absoluten geozentrischen Koordinatensystem an den digitalen Verarbeitungsrechner (8) zu liefern.

EP 1 031 847 B1

FIG.1  ART ANTÉRIEUR

FIG.2  ART ANTÉRIEUR

FIG.3 ART ANTÉRIEUR

FIG.4

FIG.5

$P_{MUSIC}(\theta)$ EN $\Delta = 0$

$\theta$ DEGRÉ

FIG.6

FIG.7

FIG.8

FIG.9

FIG.10

MASQUE 4-CONNEXITÉS

FIG.11a

MASQUE 8-CONNEXITÉS

FIG.11b

FIG.12